Europäisches Patentamt

European Patent Office

Office européen des brevets

(19)

(11) Veröffentlichungsnummer : **0 133 679**
**B1**

(12) **EUROPÄISCHE PATENTSCHRIFT**

(45) Veröffentlichungstag der Patentschrift :
03.12.86

(21) Anmeldenummer : 84108965.9

(22) Anmeldetag : 28.07.84

(51) Int. Cl.⁴ : **B 65 G 59/08**, B 65 G 47/08

(54) Sackvereinzelungsvorrichtung zur Auflösung eines aus Einzelgebinden gebildeten Haufwerkes, sowie ein ergänzendes Verfahren.

(30) Priorität : 03.08.83 DE 3327953

(43) Veröffentlichungstag der Anmeldung :
06.03.85 Patentblatt 85/10

(45) Bekanntmachung des Hinweises auf die Patenterteilung : 03.12.86 Patentblatt 86/49

(84) Benannte Vertragsstaaten :
AT BE CH DE FR GB IT LI NL SE

(56) Entgegenhaltungen :
DE-A- 1 756 512
DE-A- 2 152 727
DE-A- 2 353 436
DE-A- 3 021 367
DE-A- 3 139 503

(73) Patentinhaber : LUCO-TECHNIC GMBH Verfahrentechnische Anlagen
D-6474 Ortenberg 2 Lissberg (DE)

(72) Erfinder : Der Erfinder hat auf seine Nennung verzichtet

(74) Vertreter : Munderich, Paul, Dipl.-Ing.
Frankfurter Strasse 84
D-6466 Gründau-Rothenbergen (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft eine Sackvereinzelungsvorrichtung und ein Verfahren zur Auflösung eines aus Einzelgebinden bestehenden Haufwerkes in eine geordnete, gleichgerichtete und annähernd abstandsgleiche Sackfolge, insbesondere für Säcke höherer Festigkeit, aus Jute, Sisal oder dgl., mit einem Sackaufnahmetrichter zur Einlagerung des aus Säcken bestehenden Haufwerkes, wobei der Boden des Sackaufnahmetrichters in Abgaberichtung geneigt und als Hubtisch ausgebildet ist, wobei der Hubtisch in Abhängigkeit von der jeweiligen Abgleitlage von Säcken aus dem Haufwerk zur Abwurfkante des Sackaufnahmetrichters selbsttätig bis zu einer übereinstimmenden Höhe des Hubtisches und der Abwurfkante anhebbar und bei Entleerung zurückführbar ausgebildet ist.

Eine derartige Vorrichtung und ein derartiger Verfahren sind aus der DE-A-3 021 367 bekannt.

Anlagen dieser bekannten Art ermöglichen die Abgabe der Einzelgebinde in beliebig steuerbaren Folgeabständen aus der jeweils zur Entleerung anstehenden Schichtlage der Palette heraus und, — bei geräumter Schicht — die schnelle Lagefixierung der Einzelgebinde der nachfolgend in Abgabeposition verbrachten Schichtlage.

Hierbei wird die Palette in eine mit Hubboden ausgerüstete Kippvorrichtung eingebracht, die nach oben durch eine Lagerplatte begrenzt ist, wobei eine von der Kippvorrichtung ausgehende, durch eine Klappe verschließbare Rutsche, für die Abgabe vorgesehen ist.

Bei durch die Klappe geöffnetem Eingang in die Rutsche sind die Druckelemente in Entspannungsrichtung einzeln nacheinander betätigbar, so daß jeweils der Folgeabstand zwischen den abzugebenden Gebinden individuell einstellbar ist.

Die Einstellung der Folgeabstände kann selbstverständlich auch durch eine Programmsteuerung für die durch die Druckelemente betätigbaren Spannwerkzeuge veranlaßt werden.

Die mit diesen Depalettieranlagen mögliche Einstellung einer exakt gleichbleibenden Sackfolge ist insbesondere dann optimal, wenn sie im Tandem aus zwei parallelen Anlagen erfolgt.

Der damit verbundene technische Aufwand für die überwiegende Mehrzahl der Vereinzelungsprobleme ist nicht realistisch bzw. gerechtfertigt.

Die Aufgabe der Erfindung besteht darin, eine Sackvereinzelungsvorrichtung nach der eingangs definierten Art zu schaffen, für deren Betrieb die Notwendigkeit einer vorgeordneten Einbringung der Säcke in diese entfällt und deren Nachbeschickung — jeweils nach Auflösung des zuvor aufgegebenen Haufwerkes — durch betriebsübliche Transportmittel, wie Schaufellader oder Gabelstapler, so schnell erfolgen kann, daß, in aller Regel, die Speicherkapazität der Gesamtvorrichtung ausreichend ist, um keine Unterbrechung des in praxi abstandsgleichen Austrages der Säcke eintreten zu lassen.

Die erfindungsgemäße Lösung dieser Aufgabe sieht folgende Merkmale vor :

a) bei ungeordneter Einlagerung des Haufwerkes ist der Hubtisch in unregelmäßigen Folgeabständen anhebbar ;

b) der Abwurfkante, deren Breite mindestens der Breite der doppelten Sacklänge entspricht, ist eine über diese Breite greifende, mit Hubelementen versehene Aushubwalze parallel versetzt so zugeordnet, daß die horizontalen Tangenten an die Peripherie der Aushubwalze und an die Abwurfkante etwa in gleicher Höhe liegen und der Abstand zwischen der Abwurfkante und der Achse der Aushubwalze so eingestellt ist, daß die Hubelemente den Freiraum zwischen der Aushubwalze und der Abwurfkante im wesentlichen überbrücken ;

c) unter der Aushubwalze ist ein gleich breiter, ansteigend antreibbarer Bandförderer angeordnet, unter dessen Abgabeseite zumindest ein weiterer, gleichgerichteter, ebenfalls ansteigend transportierender Bandförderer in gleicher Breite des vorgeordneten Bandförderers nachgeordnet ist ;

d) dem letzten, in Austragsrichtung weisenden Bandförderer ist ein der Sackbreite entsprechend dimensionierter Bandförderer senkrecht zugeordnet, wobei ein Höhenunterschied zwischen dem Bandförderer und dem tieferliegenden Bandförderer etwa in Höhe der Sacklänge vorgesehen ist ;

e) im Übergabebereich der beiden senkrecht zueinander angeordneten Bandförderer ist über die Breite des durch den Bandförderer bestimmten Übergabebereichs, diesem gegenüberliegend, eine den Bandförderer begrenzende, unter ca. 45° nach außen gerichtete Muldenwand vorgesehen ;

f) es sind Antriebsglieder zur unterschiedlichen Einstellung der Bandgeschwindigkeiten der einander nachfolgenden Bandförderer vorgesehen ;

g) die Steigungswinkel der Bandförderer sind einstellbar, und

h) es sind Reflektions-Lichtschranken als fotoelektrische Überwachungsmittel zur Steuerung des Hubtisches, der Aushubwalze und der nachgeordneten Bandförderer vorgesehen.

Durch die DE-OS 31 39 503 wurde eine Vereinzelungsanlage für eine Mehrzahl von weich verpackten Gebinden, insbesondere für Sackhieven bekannt, die auch mit mehreren aneinander anschließenden und in Reihenfolge mit zunehmenden Geschwindigkeiten antreibbaren Fördermitteln ausgerüstet ist.

Das Kriterium dieser Erfindung ist, daß das erste der aneinander anschließenden Fördermittel ein Rollentisch ist, der um eine Achse, die in der Nähe und parallel zur letzten, am Ausgangsende des Tisches befindlichen Rolle liegt, aus der Waagrechten nach oben verschwenkbar ist, und dessen Rollen mindestens zwei Gruppen bilden und gruppenweise an einen Drehantrieb anschließbar sind. Die jeweils nicht angetriebenen Rollen sind durch eine Bremse gegen Drehung festlegbar.

Der Rollentisch wird in horizontaler Lage mit parallel gerichteten, senkrecht zur Abrollrichtung des Tisches auflagernden Gebinden beschickt, wobei z. B. die Beschickung durch die Aufgabe von bereits geordneten Sackhieven erfolgen kann.

Nach ausreichender Beschickung und erfolgter Festlegung der nicht anzutreibenden Rollen gegen Drehung durch die Bremse werden die Säcke auf das Folgeband aufgegeben.

Die Anordnung des zum Übergabeende neigbaren Rollentisches ermöglicht unterschiedliche Winkeleinstellungen, die in Verbindung mit den abgebremsten Rollengruppen eine erste Entzerrung der Sackfolge bewirken.

Die anschließenden und in ihrer Reihenfolge mit zunehmender Geschwindigkeit angetriebenen Fördermittel ermöglichen eine entsprechend den Differenzgeschwindigkeiten stufenweise Vergrößerung des Sackabstandes.

Diese Vereinzelungsanlage hat den gravierenden Nachteil der Notwendigkeit der Beschickung des Rollentisches mit Säcken, die, parallel zueinander, geordnete Stapel bzw. Haufwerke bilden.

Eine entsprechende Vorordnung erfolgt entweder auf dem Rollentisch selbst oder aber auf zur Übergabe auf den Rollentisch geeigneten Paletten.

Eine Ausnahme bildet die Aufgabe von Sackhieven, bei der eine Gleichrichtung der Gebinde bereits gegeben ist.

Die erforderliche Gleichrichtung, d. h. die Ordnung der Gebinde auf dem Rollentisch oder entsprechenden Paletten, ist nicht nur arbeitsintensiv, sondern sie erfordert — auch bei bereits gegebener Vorordnung der Haufwerke bzw. Pulks — verhältnismäßig lange Stillstandszeiten der Anlage zwischen dem Abschluß einer Auflösungsphase und der Einleitung einer neuen Auflösungsphase der Haufwerke.

Daraus resultiert aber weiter, daß durch die gegebene, sich wiederholende längere Unterbrechung der Kontinuität der Sackfolge die weiterverarbeitenden Einrichtungen nicht mit der erforderlichen Gleichmäßigkeit beschickt werden können, so daß, insbesondere bei Überführung des Sackgutes in thermische Prozesse, zusätzliche Schwierigkeiten bzw. ein zusätzlicher Aufwand bei Ablauf der Verfahrenssteuerung entstehen können.

Bei der erfindungsgemäßen Lösung wird durch die nicht gegebene Notwendigkeit einer gleichgerichteten, geordneten Sackaufgabe und die vorgesehene Einlagerung eines aus Säcken bestehenden Haufwerkes in einen in Richtung der Sackweiterführung geneigten Sammeltrichter, dessen Boden als Hubtisch ausgebildet ist, ein wesentlicher Kostenfaktor der Sackvereinzelung eliminiert.

Der in unregelmäßigen Folgeabständen in Abhängigkeit von der Abgleitlage von aus jeweils in oberster Position sich befindenden Säcken zu einer über die Breite des Sammeltrichters ausgebildeten Abwurfkante gesteuerte Hubantrieb verhindert eine Überbelegung der weiterführenden, verbundenen Teileinrichtungen.

Die Aufgabe der Säcke aus dem Sammeltrichter über die Abwurfkante auf hintereinander angeordnete, ansteigende Bandförderer, erfolgt durch die der Abwurfkante zugeordnete, mit Aushubelementen versehene Aushubwalze, deren Umfangsgeschwindigkeit letztlich ein wesentlicher, die Austragsleistung mitbestimmender Parameter ist.

Dem letzten, zumindest die doppelte Sackbreite aufweisenden Bandförderer, ist unterhalb dessen Abwurfbereich, senkrecht zur Förderrichtung der Breitbänder, ein in der Regel im wesentlichen horizontal gerichteter Bandförderer mit etwa der halben Breite der vorgeordneten Bandförderer zugeordnet, wobei, wie erwähnt, der Höhenunterschied zwischen dem Übergabebereich und dem Aufnahmebereich der senkrecht hierzu angeordneten Bandförderer der Sacklänge entspricht.

Über die Breite des Übergabebereiches wird der senkrecht hierzu abfördernde Bandförderer durch eine unter ca. 45° nach außen gerichtete Muldenwand begrenzt.

Diese Muldenwand sichert die in Längsrichtung der vorgeordneten Bandförderer aufgegebenen Säcke bei senkrechtem Auftreffen mit ihrer Kopfseite und dem meist damit verbundenen Überschlag nach außen und verhindert ein Abgleiten aus der Sackvereinzelungsvorrichtung.

Die so auftreffenden Säcke werden, wie später eingehend beschrieben, in ihrer Längserstreckung in Austragsrichtung verbracht.

Im weiteren ist vorgesehen, daß die den einzelnen Bandförderern zugeordneten Antriebsglieder die Einstellung unterschiedlicher Bandgeschwindigkeiten ermöglichen.

Die fotoelektrischen Überwachungsmittel dienen zur Steuerung und Kontrolle der Vorrichtung.

Die Steigungswinkel der Bandförderer sind gleich oder unterschiedlich einstellbar, was u. a. die Anpassung an die zu fördernden Produkte erleichtert.

Zur Frage des Anstellwinkels der Bandförderer wird für den Regelfall vorgeschlagen, daß der erste ansteigende Bandförderer einen Anstellwinkel von 27° und der unter ihm angeordnete Bandförderer einen Anstellwinkel von 21° aufweist.

Zur weiteren konstruktiven Ausbildung der Vorrichtung ist vorgesehen, daß zwischen dem rücklaufenden Trum des Übergabe-Bandförderers und dem rechtwinklig dazu angeordneten End-Bandförderer eine Sperrwand und zwischen dem rücklaufenden Trum des ersten Bandförderers und dem vorlaufenden Trum des Übergabe-Bandförderers eine Sperrwand vorgesehen ist, und daß der End-Bandförderer außerhalb des Bereiches der Muldenwand durch Leitwände und die weiteren Bandförderer einschließlich der Aushubwalze beidseitig durch je eine zusammenhängende Leitwand abgegrenzt sind, wobei die unterseitigen Abdeckungen der Bandförderer in einen Gutsammeltrichter überführen.

Die Anordnung von Sperrwänden verhindert im Bereich der Übergabe der Säcke mögliche Führungsfehler, insbesondere die Einziehung der Säcke in Richtung des Bandrücklaufes und damit die Möglichkeit eines Fehlaustrages aus der Vorrichtung, sowie die damit verbundenen möglichen Störungen des Bandlaufes.

Die darüberhinaus vorgesehenen Leitwände fördern im weiteren die Betriebssicherheit.

Die vorgeschlagene Vorrichtung erfüllt in vollem Umfang die Forderung der Aufgabenstellung.

Das erfindungsgemäße Verfahren zur Auflösung eines aus Einzelgebinden bestehenden Haufwerkes durch eine Sackvereinzelungsvorrichtung, wobei die Säcke im Sackaufnahmetrichter durch den eine schiefe Ebene bildenden Hubtisch schwerkraftbedingt aus seiner, der Abwurfkante zugerichteten Lage in deren Bereich gleitet, sieht folgendes vor :

a) die Säcke werden aus dem Sackaufnahmetrichter über die Aushubwalze auf den Bandförderer und danach auf mindestens einen weiteren Bandförderer, eine Förderstrecke bildend, gegeben ;

b) am Ende dieser Förderstrecke werden die Säcke an den senkrecht zur ursprünglichen Förderrichtung und tiefer angeordneten Bandförderer übergeben, wobei die in Förderrichtung der vorgeordneten Bandförderer ankommenden Säcke auf dem Bandförderer zunächst senkrecht mit einer ihrer Kopfflächen aufsteht und dann — überkippend — an der Muldenwand anliegen, um dann anschließend durch ihren kraftschlüssigen Aufstand auf dem Bandförderer in Verbindung mit dem Vorschub in Richtung des Bandlaufes von der Muldenwand abgezogen zu werden, bzw. — bei im wesentlichen senkrecht zur Förderrichtung der vorgeordneten Bandförderer aufliegenden Säcke — diese dem parallel zu ihrer Längserstreckung verlaufenden Bandförderer in Förderrichtung übergeben werden.

Zu der vorstehend beschriebenen Übergabe und Ausrichtung der Säcke aus den beiden extremen Aufgabelagern heraus ist festzuhalten, daß selbstverständlich jede andere Zwischenlage des Sackes im Übergabebereich zu dem rechtwinklig und tiefer angeordneten End-Bandförderer ebenfalls eine Gleichrichtung erfährt, und zwar unabhängig davon, inwieweit noch eine Auflage an der Muldenwand gegeben ist, oder ob der Sack bereits etwa in Förderrichtung diesem letzten Band der Bandfolge aufliegt.

Zur Steuerung des Verfahrensablaufes wird vorgeschlagen, daß dieser durch vier hintereinander angeordnete Lichtschranken kontrolliert bzw. gesteuert wird, daß die Belegung des Hubtisches in dessen Beschickungsstellung durch die erste Lichtschranke kontrolliert wird, bei belegtem Hubtisch, nach Ablauf einer voreinstellbaren Verzögerung und/oder einer zusätzlichen Schalterbetätigung, Impuls für dessen absatzweisen Antrieb gegeben wird, wobei jeder Hubschritt durch die die Aushubwalze und die Abwurfkante kontrollierende zweite Lichtschranke bei nicht mehr gegebener Belegung eingeleitet und dessen Schrittlänge durch einen in oberster Abgleitlage sich befindenden Sack, bei gegebener Korrespondenz mit der Abwurfkante bestimmt wird, wobei nach vollständiger Entleerung des Hubtisches — veranlaßt durch die Freimeldung der zweiten Lichtschranke — der Antrieb des Hubtisches diesen wieder in seine Beschickungsstellung zurückführt, und daß die vierte Lichtschranke die gesamte Breite des Übergabebereiches auf dem Bandförderer kontrolliert und diesen — bei belegter Auflage sowie bei belegtem, durch die dritte Lichtschranke kontrolliertem Bandförderer — diesen und den vorgeordneten Bandförderer zusammen mit der Aushubwalze stillsetzt oder aber, bei nicht belegtem Übergabebereich, die rückwärtige Zuförderung noch so lange fortsetzt, bis dessen Belegung durch die ihm zugeordneten dritte Lichtschranke bestätigt ist.

Grundsätzlich ist festzuhalten, daß der Abstand der geordneten, gleichgerichteten Säcke zueinander durch die Summe der Differenzgeschwindigkeiten aller vorgeordneten Bandförderer zueinander in Verbindung mit der endkontrollierenden vierten Lichtschranke bestimmt wird, daß die Vereinzelungsleistung durch die Austragsleistung der Aushubwalze bestimmt wird, und daß die Umfangsgeschwindigkeit der Aushubwalze geringer bis etwa gleich der Bandgeschwindigkeit des Bandförderers ist, und daß die Bandgeschwindigkeiten der Bandförderer von Band zu Band in an sich bekannter Weise ansteigend eingestellt sind.

Abschließend wird vorgeschlagen, daß zusätzlich durch Einstellung unterschiedlicher Anstellwinkel der ansteigend betriebenen Bandförderer der in die Ebene projizierte Förderweg regelbar veränderbar ist.

Damit trägt das Verfahren zur Auflösung eines aus Einzelgebinden bestehenden Haufwerkes durch die eingangs beschriebene Sackvereinzelungsvorrichtung in wesentlichem Umfang zur zusätzlichen Vervollkommnung der Lösung der Aufgabe bei.

Die erfindungsgemäße Sackvereinzelungseinrichtung wird durch die beispielsweise Darstellung einer möglichen Ausführungskonzeption näher erläutert.

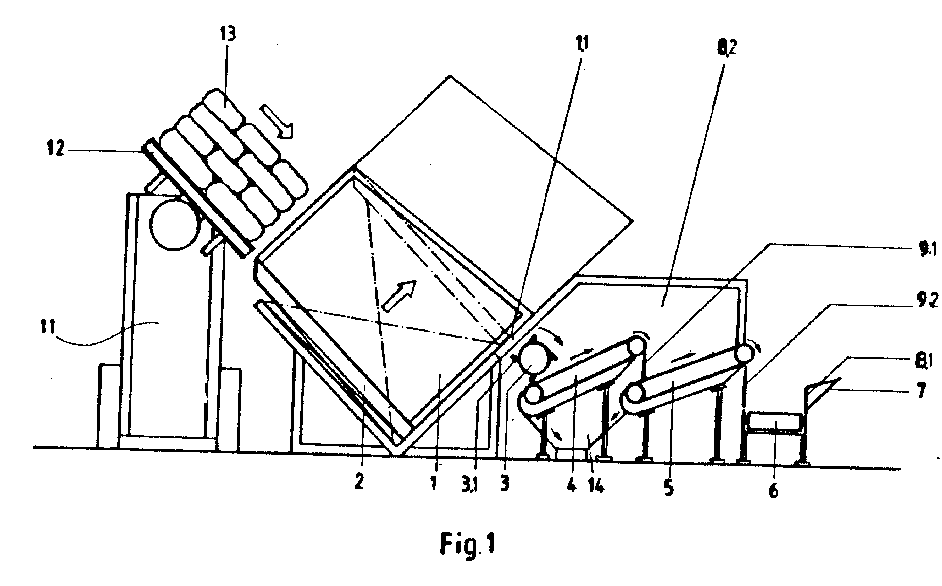

Figur 1 zeigt die Einrichtung einschließlich Beschickungsgerät im Aufriß.

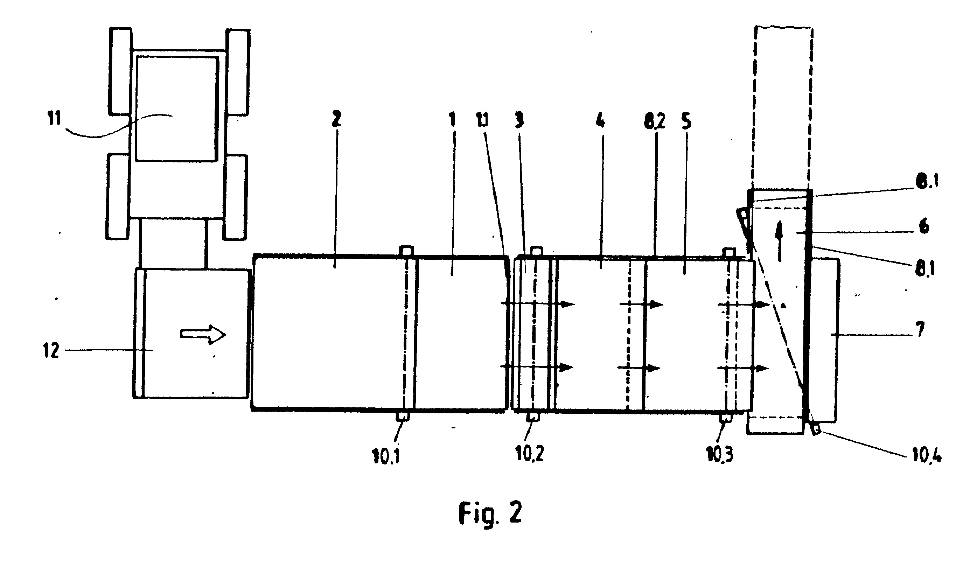

Figur 2 zeigt die Einrichtung im Grundriß einschließlich andeutungsweise, d. h. gestrichelt dargestellt, den für den Abtransport vorgesehenen Förderer für die quasi abstandsgleich folgenden Säcke.

Die Säcke sind auf einer Palette 12 gestapelt und werden durch einen mit Schwenkgabel ausgerüsteten Gabelstapler 11 so weit angehoben, daß diese bei einer Neigung von ca. 45° von der Palette 12 auf den Hubtisch 2 des Sackaufnahmetrichters 1 übergleiten. Der Abwurfkante 1.1 des Sackaufnahmetrichters 1 ist eine Sackaushubwalze 3 so zugeordnet, daß die an ihr ausgebildeten Hubelemente 3.1 die über die Abwurfkante tretenden Säcke 13 erfassen und auf einen unter 27° angestellten Bandförderer 4 übergeben, der in der Folge auf einen im Falle dieses Beispieles gleichen Achsabstand aufweisenden, jedoch nur 21° geneigten zweiten Bandförderer 5 abwirft. Hierbei werden, bei gleichem Achsabstand der Umlenkrollen der Bandförderer 4 und 5 eine kürzere und eine längere auf die Horizontale projizierte Wegstrecke zurückgelegt und bereits hierdurch der Abstand der Säcke zueinander in einer ersten Stufe entzerrt, d. h., vergrößert, während die von Förderer zu Förderer vorgesehene Geschwindigkeitserhöhung die weitere Erstreckung der Abstände bewirkt. Die Bandförderer 4 und 5 sind in ihrer Breite so abgestimmt, daß sie zwei nebeneinander, in ihrer Länge quer zur Förderrichtung liegende Säcke aufnehmen können.

Voraussetzung für den Austrag aus dem Sackaufnahmetrichter 1, dessen eigentlicher Boden der Hubtisch 2 ist, ist die Verbringung des Hubtisches 2 in eine die Einleitung der Abgabe der Säcke ermöglichenden Höhe über die Abwurfkante 1.1.

Durch die Bandsteigungen werden an der Übergabeseite übereinanderliegende Säcke in aller Regel nacheinander abgeworfen, d. h., es fällt zuerst der oben liegende Sack, während der dem Band aufliegende Sack nachfolgt. Dem Abwurfbereich des Bandförderers 5 ist ein etwa um die Sacklänge in seiner Höhe tiefer gelegter Bandförderer 6 rechtwinklig zugeordnet, der über die Breite der Übergabe, und zwar auf der der Übergabe gegenüberliegenden Seite, durch eine Muldenwandung 7 begrenzt ist, während der Freiraum zwischen dem rücklaufenden Bandtrum des Bandförderers 5 und dem vorlaufenden Bandtrum des Bandförderers 6 durch eine Sperrwand 9.2 abgegrenzt ist. Die Sperrwand 9.2 verhindert das fallweise denkbare Einziehen der abgeworfenen Säcke 13 durch das Untertrum des Bandförderers 5. Die Muldenwandung 7 sowie die Sperrwandung 9.2 führen beidseitig des Bandförderers 6 in je eine Leitwandung 8.1 über.

Eine zweite, zwischen dem Bandförderer 4 und dem Bandförderer 5 angeordnete Sperrwand 9.1 verhindert in gleicher Weise wie die Sperrwand 9.2 ein Zurückziehen der Säcke 13.

Bei der Übergabe des Sackes 13 auf den Bandförderer 6 fällt der in seiner Längserstreckung der Förderrichtung des Bandförderers 5 korrespondierend ausgerichtete Sack 13 mit seinem schmalseitigen Aufstand auf das Band des Bandförderers 6 und legt sich überkippend zunächst gegen die Muldenwand 7, von der er durch das laufende Band des Bandförderers 6, dem er kraftschlüssig aufsteht, in Längsrichtung des Bandverlaufes des Bandförderers 6 abgezogen wird. Die Bandbreite des Bandförderers 6 ist dabei für die Aufnahme des Sackes 13 in Längsrichtung abgestimmt. Ein etwa rechtwinklig zum Bandverlauf des Bandförderers 5 ausgerichteter Sack 13 liegt bereits in seiner richtigen Lage auf dem Bandförderer 6.

Die Bandförderer 4 und 5 sind beidseitig durch die Leitwände 8.2 abgegrenzt. Das aus verletzten Säcken eventuell auslaufende Gut wird durch den die Übergabestelle der Bandförderer 4 und 5 erfassenden Gutsammeltrichter 14 aufgefangen.

Die Bandgeschwindigkeit zwischen den Bändern 4 und 5 und 6 ist, wie bereits erwähnt, jeweils von Band zu Band steigend eingestellt, wobei die Geschwindigkeiten durch Vario-Antriebe geregelt werden können.

Zur Steuerung ist festzuhalten, daß im Grundriß betrachtet die Reflektionslichtschranke 10.4 an der rechtwinkligen Umlenkung von dem Bandförderer 6, ausgehend vom Stoßbereich bzw. Übergabebereich des Bandes 5 zu Band 6, innenseitig in einem spitzen Winkel von etwa 20° zur Abgabeseite von Band 5 gerichtet ist, so daß der Lichtstrahl die ganze Abwurfbreite von Band 5 kontrolliert.

Ist nun im Übergabebereich der Bandförderer 6 belegt, so schaltet der übergebende Bandförderer 5 ebenfalls ab, sofern er im Übergabebereich zu Bandförderer 6, bestätigt durch Lichtschranke 10.3, belegt ist.

Ist dies nicht der Fall, läuft der übergebende Bandförderer 5 so lange weiter, bis die Lichtschranke 10.3 die Belegung dieses Bandes feststellt und den Abschaltimpuls für die bereits durch die Lichtschranke 10.4 entsperrten Schalter der Antriebe für die Bandförderer 5 und 4, die Aushubwalze 3 und den Hubtisch 2 gibt.

Die achsparallel zur Aushubwalze 3, oberhalb dieser, angeordnete Lichtschranke 10.2 kontrolliert die Belegung der Aushubwalze 3 und damit auch der Abwurfkante 1.1 des Sackaufnahmetrichters 1, d. h. mit anderen Worten, auch die Übergabehöhe des Sackpulkes. Sofern keine Belegung der Aushubwalze 3 und damit 1.1 mehr gegeben ist, veranlaßt die Lichtschranke 10.2 jeweils schrittweise das weitere Anheben des Hubtisches 2, bis dieser ganz entleert ist.

Die Lichtschranke 10.1 kontrolliert die Belegung des Hubtisches 2 und hebt diesen bei gegebener Belegung in Beschickungsstellung des Sackpulkes zur Abwurfkante 1.1 in Richtung der Aushubwalze 3 an. Ist die Belegung des Hubtisches 2 nicht mehr gegeben, so veranlaßt die Lichtschranke 10.1 dessen Rückführung in die Ausgangsstellung.

**Patentansprüche**

1. Sackvereinzelungsvorrichtung zur Auflösung eines aus Einzelgebinden bestehenden Haufwerkes in eine geordnete, gleichgerichtete und annähernd abstandsgleiche Sackfolge, insbesondere für Säcke höherer Festigkeit, aus Jute, Sisal oder dgl., mit einem Sackaufnahmetrichter (1) zur Einlagerung des aus Säcken (13) bestehenden Haufwerkes, wobei der Boden des Sackaufnahmetrichters (1) in Abgaberichtung geneigt und als Hubtisch (2) ausgebildet ist, wobei der Hubtisch (2) in Abhängigkeit von der jeweiligen Abgleitlage von Säcken (13) aus dem Haufwerk zur Abwurfkante (1.1) des Sackaufnahmetrichters (1) selbsttätig bis zu einer übereinstimmenden Höhe des Hubtisches (2) und der Abwurfkante (1.1) anhebbar und bei Entleerung zurückführbar ausgebildet ist, gekennzeichnet durch folgende Merkmale :

a) bei ungeordneter Einlagerung des Haufwerkes ist der Hubtisch (2) in unregelmäßigen Folgeabständen anhebbar ;

b) der Abwurfkante (1.1), deren Breite mindestens der Breite der doppelten Sacklänge entspricht, ist eine über diese Breite greifende, mit Hubelementen (3.1) versehene Aushubwalze (3) parallel versetzt so zugeordnet, daß die horizontalen Tangenten an die Peripherie der Aushubwalze (3) und an die Abwurfkante (1.1) etwa in gleicher Höhe liegen und der Abstand zwischen der Abwurfkante (1.1) und der Achse der Aushubwalze (3) so eingestellt ist, daß die Hubelemente (3.1) den Freiraum zwischen der Aushubwalze (3) und der Abwurfkante (1.1) im wesentlichen überbrücken ;

c) unter der Aushubwalze (3) ist ein gleich breiter, ansteigend antreibbarer Bandförderer (4) angeordnet, unter dessen Abgabeseite zumindest ein weiterer, gleich gerichteter, ebenfalls ansteigend transportierender Bandförderer (5) in gleicher Breite des vorgeordneten Bandförderers (4) nachgeordnet ist ;

d) dem letzten, in Austragsrichtung weisenden Bandförderer (5) ist ein der Sackbreite entsprechend dimensionierter Bandförderer (6) senkrecht zugeordnet, wobei ein Höhenunterschied zwischen dem Bandförderer (5) und dem tieferliegenden Bandförderer (6) etwa in Höhe der Sacklänge vorgesehen ist ;

e) im Übergabebereich der beiden senkrecht zueinander angeordneten Bandförderer (5, 6) ist über die Breite des durch den Bandförderer (5) bestimmten Übergabebereichs, diesem gegenüberliegend, eine den Bandförderer (6) begrenzende, unter ca. 45° nach außen gerichtete Muldenwand (7) vorgesehen ;

f) es sind Antriebsglieder zur unterschiedlichen Einstellung der Bandgeschwindigkeiten der einander nachfolgenden Bandförderer (4, 5, 6) vorgesehen ;

g) die Steigungswinkel der Bandförderer (4, 5) sind einstellbar und

h) es sind Reflektions-Lichtschranken (10.1 bis 10.4) als fotoelektrische Überwachungsmittel zur Steuerung des Hubtisches (2), der Aushubwalze (3) und der nachgeordneten Bandförderer (4, 5, 6) vorgesehen.

2. Vorrichtung nach Anspruch 1, dadurch gekennzeichnet, daß der erste ansteigende Bandförderer (4) einen Anstellwinkel von 27° und der unter ihm angeordnete Bandförderer (5) einen Anstellwinkel von 21° aufweist.

3. Vorrichtung nach Anspruch 1 oder 2, dadurch gekennzeichnet, daß zwischen dem rücklaufenden Trum des Bandförderers (5) und dem rechtwinklig dazu angeordneten Bandförderer (6) eine Sperrwand (9.2) und zwischen dem rücklaufenden Trum des Bandförderers (4) und dem vorlaufenden Trum des Bandförderers (5) eine Sperrwand (9.1) vorgesehen ist, und daß der Bandförderer (6) außerhalb des Bereiches der Muldenwand (7) durch Leitwände (8.1) und die Bandförderer (4,5) einschließlich der Aushubwalze (3) beidseitig durch je eine zusammenhängende Leitwand (8.2) abgegrenzt sind, wobei die unterseitigen Abdeckungen der Bandförderer (4, 5) in einen Gutsammeltrichter (14) überführen.

4. Verfahren zur Auflösung eines aus Einzelgebinden bestehenden Haufwerkes durch eine Sackvereinzelungsvorrichtung, wobei die Säcke (13) im Sackaufnahmetrichter (1) durch den eine schiefe Ebene bildenden Hubtisch (2) schwerkraftbedingt aus seiner, der Abwurfkante (1.1) zugerichteten Lage in deren Bereich gleitet, gemäß den Ansprüchen 1 bis 3, gekennzeichnet durch folgende Merkmale :

a) die Säcke werden aus dem Sackaufnahmetrichter (1) über die Aushubwalze (3) auf den Bandförderer (4) und danach auf mindestens einen weiteren Bandförderer (5), eine Förderstrecke bildend, gegeben ;

b) am Ende dieser Förderstrecke werden die Säcke an den senkrecht zur ursprünglichen Förderrichtung und tiefer angeordneten Bandförderer (6) übergeben, wobei die in Förderrichtung der vorgeordneten Bandförderer (4, 5) ankommenden Säcke (13) auf dem Bandförderer (6) zunächst senkrecht mit einer ihrer Kopfflächen aufsteht und dann — überkippend — an der Muldenwand (7) anliegen, um dann anschließend durch ihren kraftschlüssigen Aufstand auf dem Bandförderer (6) in Verbindung mit dem Vorschub in Richtung des Bandlaufes von der Muldenwand (7) abgezogen zu werden, bzw. — bei im wesentlichen senkrecht zur Förderrichtung der vorgeordneten Bandförderer (4, 5) aufliegenden Säcken (13) — diese dem parallel zu ihrer Längserstreckung verlaufenden Bandförderer (6) in Förderrichtung übergeben werden.

5. Verfahren nach Anspruch 4, dadurch gekennzeichnet, daß der Verfahrensablauf durch vier hintereinander angeordnete Lichtschranken (10.1 bis 10.4) kontrolliert bzw. gesteuert wird, daß die Belegung des Hubtisches (2) in dessen Beschickungsstellung durch die Lichtschranke (10.1) kontrolliert wird, bei belegtem Hubtisch (2), nach Ablauf einer voreinstellbaren Verzögerung und/oder einer zusätzlichen Schalterbetätigung, Impuls für dessen absatzweisen Antrieb gegeben wird, wobei jeder Hubschritt durch die die Aushubwalze (3) und die Abwurfkante (1.1) kontrollierende Lichtschranke (10.2) bei nicht mehr gegebener Belegung eingeleitet und dessen Schrittlänge durch einen in oberster Abgleitlage sich befindenden Sack (13), bei gegebener Korrespondenz mit der Abwurfkante (1.1) bestimmt wird, wobei nach vollständiger Entleerung des Hubtisches (2) — veranlaßt durch die Freimeldung der Lichtschranke (10.2) — der Antrieb des Hubtisches (2) diesen wieder in seine Beschickungsstellung zurückführt, und daß die Lichtschranke (10.4) die gesamte Breite des Übergabebereiches auf dem Bandförder (6) kontrolliert und diesen — bei belegter Auflage sowie bei belegtem, durch die Lichtschranke (10.3) kontrolliertem Bandförderer (5) — diesen und den vorgeordneten Bandförderer (4) zusammen mit der Aushubwalze (3) stillsetzt oder aber, bei nicht belegtem Übergabebereich, die rückwärtige Zuförderung noch so lange fortsetzt, bis dessen Belegung durch die ihm zugeordnete Lichtschranke (10.3) bestätigt ist.

6. Verfahren nach den Ansprüchen 4 oder 5, dadurch gekennzeichnet, daß der Abstand der geordneten, gleichgerichteten Säcke zueinander durch die Summe der Differenzgeschwindigkeiten aller vorgeordneten Bandförderer (4, 5) zueinander in Verbindung mit der endkontrollierenden Lichtschranke (10.4) bestimmt wird, daß die Vereinzelungsleistung durch die Austragsleistung der Aushubwalze (3) bestimmt wird, und daß die Umfangsgeschwindigkeit der Aushubwalze (3) geringer bis etwa gleich der Bandgeschwindigkeit des Bandförderers (4) ist, und daß die Bandgeschwindigkeiten der Bandförderer von Band zu Band in an sich bekannter Weise ansteigend eingestellt sind.

7. Verfahren nach Anspruch 4, dadurch gekennzeichnet, daß zusätzlich durch Einstellung unterschiedlicher Anstellwinkel der ansteigend betriebenen Bandförderer (4, 5) der in die Ebene projizierte Förderweg regelbar veränderbar ist.

**Claims**

1. A separating device for decomposing stacks of single elements into a neat, aligned and approximately equidistant sack sequence, in particular, for sacks of increased strength, made of jute, sisal etc., comprising a sack receiving hopper (1) for introducing the stack of sacks (13), with the bottom of the sack receiving hopper (1) sloping in the dispensing direction and being formed as a lift table (2), and with the lift table (2) in response to the respective sliding-off position of sacks (13) from the stack to the discharge edge (1.1) of the sack receiving hopper (1) being so formed as to be automatically lifted to a level common to both lift table (2) and discharge edge (1.1) and to be returned upon evacuation, characterized by the following features :

a) in non-aligned introduction of the stack, the lift table (2) is capable of being lifted at irregular sequential intervals ;

b) associated in parallel staggered relationship to the discharge edge (1.1) the width of which corresponds at least to the width of the double sack length, is a lift roller (3) sweeping across said width and provided with lifting elements (3.1) such that the horizontal tangents abut the periphery of the lift roller (3) and the discharge edge (1.1) approximately at the same level and that the distance between the discharge edge (1.1) and the axis of the lift roller (3) is so adjusted that the lifting elements (3.1) substantially bridge the free space between the lift roller (3) and the discharge edge (1.1) ;

c) disposed below the lift roller (3) is an ascendably drivable belt conveyor (4) of equal width, under the discharge side of which is disposed at least one additional aligned belt conveyor (5) transporting also in the ascending direction and being of the same width as the preceding belt conveyor (4) ;

d) vertically associated to the last belt conveyor (5) pointing in the direction of discharge is a belt conveyor (6) dimensioned in accordance with the sack width, with a difference in height being provided between the belt conveyor (5) and the belt conveyor (6) disposed at a lower level, approximately at the level of the sack length ;

e) provided in the transfer area of the two belt conveyors (5, 6) vertically disposed with respect to one another, across the width of the transfer area defined by the belt conveyor (5), in opposite relationship therewith, is a troughed wall (7) directed outwardly at an angle of approximately 45° and confining the belt conveyor (6) ;

f) driving elements are provided for the different adjustment of the beld speeds of the succeeding belt conveyors (4, 5, 6) ;

g) the angles of ascent of the belt conveyors (4, 5) are adjustable ; and

h) reflexion light barriers (10.1 to 10.4) forming photoelectric monitoring devices are provided for controlling the lift table (2), the lift roller (3) and the subsequent belt conveyors (4, 5, 6).

2. A device according to claim 1, characterized in that the first ascending belt conveyor (4) has an angle of incidence of 27° whereas the belt conveyor (5) disposed therebelow has an angle of incidence of 21°.

3. A device according to claims 1 or 2, characterized in that provided between the returning strand of the belt conveyor (5) and the belt conveyor (6) disposed at right angles thereto is a barrier wall (9.2), and provided between the returning strand of belt conveyor (4) and the advancing strand of the belt conveyor (5) is a barrier wall (9.1) ; and that the belt conveyor (6) externally of the area of the troughed wall (7) is confined by guide walls (8.1) and the belt conveyors (4, 5) along with the lift roller (3), on either side, are confined by respectively one coherent guide wall (8.2), with the under-sided coverings of the belt conveyors (4, 5) terminating in a bulk collecting hopper (14).

4. A method of decomposing a stack made of individual elements, by means of a sack separating device, with the sacks (13), in the sack receiving hopper (1), due to gravity through the lift table (2) forming an inclined plane, sliding from the position facing the discharge edge (1.1) into the area of the latter, in accordance with claims 1 to 3, characterized by the following features :

a) the sacks are transported from the sack receiving hopper (1), via lift roller (3), to the belt conveyor (4) and thereafter at least to one further belt conveyor (5) thereby forming a conveying track ;

b) at the end of such conveying track, the sacks are transferred to belt conveyor (6) disposed vertical to the original direction of conveyance and at a lower level, with the incoming sacks (13) arriving in the direction of conveyance of the preceding belt conveyors (4, 5), with one of their headers first vertically standing upright on the belt conveyor (6) and then in overturning manner — abutting the troughed wall (7) in order to be subsequently withdrawn due to their force-locking up-right position on the belt conveyor (6) in conjunction with the advance in the direction of the belt movement, from the troughed wall (7), or with the sacks (13) substantially applied vertical to the conveying direction of the preceding belt conveyors (4, 5) being transferred in the direction of conveyance to the belt conveyor (6) extending in parallel to the longitudinal movement of the sacks.

5. A method according to claim 4, characterized in that the process pattern is checked and controlled, respectively, by four series-arranged light barriers (10.1 to 10.4), that the loading of lift table (2) in the charging position thereof is controlled by light barrier (10.1), that, with the lift table (2) loaded, after the end of a preadjustable delay and/or an additional switch operation, a pulse is generated for the section-wise drive thereof, with each lifting step being initiated by the light barrier (10.2) controlling the lifting roller (3) and the discharge edge (1.1) in the absence of a loaded condition, and with the step length thereof being determined by a sack (13) taking the uppermost sliding-off position while conforming to the discharge edge (1.1), with the drive of the lift table (2), after complete evacuation of the lift table (2), caused by the evacuation signal of the light barrier (10.2), returning the table to its charging position ; and that the light barrier (10.4) controls the entire width of the transfer area on the belt conveyor (6) and, in loaded condition and with a loaded belt conveyor (5) controlled by the light barrier (10.3), stops the latter and the preceding belt conveyor (4) along with the lift roller (3) or, in an unloaded transfer area, continues the rearward feed until loading thereof is confirmed by the light barrier (10.3) associated thereto.

6. A method according to claims 4 or 5, characterized in that the space between the neat, rectified sacks is determined by the sum of the differential speeds of all preceding belt conveyors (4, 5) with respect to one another in conjunction with the end-controlled light barrier (10.4), that the separating capability is determined by the discharge effort of the lift roller (3), and that the circumferential speed of the lift roller (3) approximately corresponds to the belt speed of the belt conveyor (4) or is lower than such speed, and that the belt speed of the belt conveyor in known per se manner is adjusted to rise from belt to belt.

7. A method according to claim 4, characterized in that, by adjusting different angles of incidence of the ascendingly driven belt conveyors (4, 5), the conveying track projected to the plane, in addition, is adjustably variable.

**Revendications**

1. Dispositif pour individualiser des sacs pour séparer un ensemble formé des éléments individuels dans une succession de sac mise en ordre, alignée et environ équidistante, en particulier pour des sacs d'une stabilité supérieure, de jute, sisal, etc., comportant un entonnoir récepteur de sacs (1) pour introduire l'ensemble formé de sacs, le fond de l'entonnoir récepteur de sacs (1) étant incliné en sens de déchargement et formé comme table élévatrice (2), la table élévatrice (2) en réponse de la position de glissement respective de sacs (13) de l'ensemble à l'arête de déchargement (1.1) de l'entonnoir récepteur de sacs (1) étant formée dans une manière automatiquement enlevable à une hauteur de la table élévatrice (2) identique à l'hauteur de l'arête de déchargement (1.1), et au vidage étant formé dans une manière retournable, caractérisé par les caractéristiques comme suite :

a) en cas d'introduction de l'ensemble non mise en ordre, la table élévatrice (2) est enlevable en intervaux de succession irréguliers ;

b) associé à l'arête de déchargement (1.1) la largeur de laquelle corresponde au moins à la largeur de la double longueur de sac, est un rouleau de levage (3) prévu d'éléments élévateurs (3.1) et s'étendant à travers de cette largeur dans une manière décalée en parallèle tellement que les tangents horizontaux affleurent la périphérie du rouleau (3) et l'arête de déchargement (1.1) à peu près au même niveau et que la distance entre l'arête de déchargement (1.1) et l'axe du rouleau de levage (3) est ajustée tellement que les éléments de levage (3.1) essentiellement jettent un pont sur l'interstice entre le rouleau (3) et l'arête de déchargement (1.1) ;

c) disposé sous le rouleau (3) de levage est une bande transporteuse (4) d'une largeur identique et commandable dans une manière montante, sous le côté de déchargement de laquelle est disposé au moins une autre bande transporteuse (5) alignée et également transportant dans une manière montante et ayant la même largeur que la bande transporteuse (4) précédée ;

d) associé dans une manière horizontale à la dernière bande transporteuse (5) montrant vers le déchargement, est une bande transporteuse (6) dimensionnée suivant la largeur de sac, une différence de niveau entre la bande transporteuse (5) et la bande transporteuse (6) disposée à un niveau plus bas, étant prévue d'environ à niveau de la longueur de sac ;

e) dans la région de transfert des deux bandes transporteuses (5, 6) disposées verticalement l'une à l'autre, à travers de la largeur de la région de transfert définie par la bande transporteuse (5), en face de celle-ci, est prévu une paroi en auge (7) délimitant la bande transporteuse (6) et dirigée vers l'extérieure sous l'angle d'environ 45°.

f) des éléments de commande sont prévus pour l'ajustement différé des vitesses de bande des bandes transporteuses (4, 5, 6) suivant l'un à l'autre ;

g) les angles d'inclinaison des bandes transporteuses (4, 5) sont ajustables, et

f) des barrières lumineuses à réflexion (10.1 à 10.4) sont prévues comme moyens de contrôle photo-électriques pour commander la table élévatrice (2), le rouleau de levage (3) et les bandes transporteuses (4, 5, 6) disposées en arrière.

2. Dispositif selon la revendication 1, caractérisé en ce que la première bande transporteuse (4) montante comporte un angle d'incidence de 27° et la bande transporteuse (5) disposée sous celle-ci comporte un angle d'incidence de 21°.

3. Dispositif selon les revendications 1 ou 2, caractérisé en ce qu'une paroi de blocage (9.2) est prévue entre le brin retournant de la bande transporteuse (5) et la bande transporteuse (6) disposée à angles droits à celle-ci, et une paroi de blocage (9.1) est prévue entre le brin retournant de la bande transporteuse (4) et le brin allant en avant de la bande transporteuse (5), et que la bande transporteuse (6) extérieurement de la région de la paroi en auge (7) est délimitée par des parois de contrôle (8.1) et les bandes transporteuses (4, 5) avec le rouleau de levage (3) sont délimitées aux deux côtés chaque fois par une paroi de contrôle (8.2) continue, les couvertures inférieures des bandes transporteuses (4, 5) débouchant dans un entonnoir collecteur de matière (14).

4. Procédé pour séparer un ensemble formé des éléments individuels par l'intermédiaire d'un dispositif pour individualiser des sacs, les sacs (13) dans l'entonnoir collecteur de sacs (1) glissant par gravité causée par la table élévatrice (2) formant un plan incliné, de la position en face de l'arête de déchargement (1.1) dans la région de laquelle, selon les revendications 1 à 3, caractérisé par les caractéristiques comme suite :

a) les sacs sont transportés de l'entonnoir collecteur de sac (1) par l'intermédiaire du rouleau de levage (3) à la bande transporteuse (4) et après au moins à une autre bande transporteuse (5) en formant une voie de roulage ;

b) au bout de cette voie de roulage, les sacs sont transférés à la bande transporteuse (6) disposée verticalement en sens de transport original et à un plan plus bas, les sacs (13) arrivant en sens de transport des bandes transporteuses (4, 5) précédentes, d'abord étant disposés sur la bande transporteuse (6) verticalement avec l'une de leur surface de tête et après — en faisant la bascule — portant à la paroi en auge (7) et, par la suite, à cause de leur disposition verticale commandée par l'influence du poids, sur la bande transporteuse (6) en conjonction avec l'avance dans la direction de mouvement de la bande, étant enlevés de la paroi en auge (7) ou — en cas les sacs (13) sont disposés essentiellement en sens vertical vers le mouvement des bandes transporteuses (4, 5) précédentes — étant transférés en sens de transport à la bande transporteuse (6) s'étendant en parallèle au mouvement longitudinal desquelles.

5. Procédé selon la revendication 4, caractérisé en ce que la suite des opérations est contrôlée ou commandée par quatre barrières lumineuses (10.1 à 10.4) disposées en série, que le chargement de la table élévatrice (2) dans la position de remplissage de laquelle est contrôlé par la barrière lumineuse (10.1), et en cas de chargement de la table (2), après une décélération pré-ajustable et/ou d'une opération de guichet supplémentaire, une pulsation pour la commande de la table par sections est produite, chaque mesure de levage étant commencée par la barrière lumineuse (10.2) contrôlant le rouleau (3) de levage et l'arête de déchargement (1.1) si la table (2) n'est plus chargée, et la longueur de cette mesure étant définie par un sac (13) se trouvant dans la position de glissage supérieure, en correspondant à l'arête de déchargement (1.1), la commande de la table élévatrice (2), après le vidage complet de la table élévatrice (2) retournant — causé par la signalisation de vidage de la barrière lumineuse (10.2) — la table (2) dans sa position de chargement ; et que la barrière lumineuse (10.4) contrôle la largeur entière de la région de transfert sur la bande transporteuse (6), et en condition chargée et avec la bande transporteuse (5) remplie et contrôlée par la barrière lumineuse (10.3) arrête celle-ci et la bande transporteuse précédente en commun avec le rouleau de levage (3), ou en case la région de transfert n'est pas chargée, continue l'alimentation jusque le chargement de laquelle est confirmé par la barrière lumineuse (10.3) associée à celle-ci.

6. Procédé selon les revendications 4 ou 5, caractérisé en ce que la distance entre les sacs mis en ordre et alignés est définie par la somme des vitesses différentielles de toutes les bandes transporteuses (4, 5) précédentes en conjonction avec la barrière lumineuse (10.4) de contrôle final ; que la capacité d'individualisation est déterminée par le rendement de déchargement du rouleau de levage (3), et que la vitesse périphérique du rouleau (3) est moins que ou égal à la vitesse de la bande transporteuse (4), et que les vitesses des bandes transporteuses sont ajustées dans une manière montante de bande à bande dans une manière connue.

7. Procédé selon la revendication 4, caractérisé en ce qu'en outre, la voie de roulage projetée au plan est variable dans une manière contrôlable en ajustant des angles d'incidence différents des bandes transporteuses (4, 5) commandées dans une manière montante.

Fig.1

Fig. 2